Europäisches Patentamt

**European Patent Office**

**Office européen des brevets**

(11) Publication number: **0 132 947**
A1

# (12) EUROPEAN PATENT APPLICATION

(21) Application number: **84304312.6**

(22) Date of filing: **26.06.84**

(51) Int. Cl.⁴: **G 01 B 7/03**
**G C5 B 19/25**

(30) Priority: **27.07.83 US 517540**

(43) Date of publication of application:
**13.02.85 Bulletin 85/7**

(84) Designated Contracting States:
**BE DE FR GB IT NL SE**

(71) Applicant: **EX-CELL-O CORPORATION**
**2855 Coolidge Highway**
**Troy Michigan 48084(US)**

(72) Inventor: **Hensey, Warren R.**
**3460 Ramada**
**Highland Michigan 48031(US)**

(74) Representative: **Hartley, David et al,**
**c/o Withers & Rogers 4 Dyer's Buildings Holborn**
**London, EC1N 2JT(GB)**

(54) **Computer programme-controlled contour inspection method.**

(57) A computer program-controlled inspection process for a surface of a workpiece mounted on an inspection table beneath a stylus or probe of an electromechanical transducer wherein dimensions and configurations along the surface of the workpiece are inspected in a predetermined path and compared with the preprogrammed dimensions and configuration heights. An outline of the workpiece and any out-of-tolerance dimensions are printed by an associated printer, and the cross-sectional shape of any selected configuration may be shown on a cathode ray tube screen. The configuration may, for example, consist of a scoreline or an edge.

EP 0 132 947 A1

0132947

-1-

COMPUTER PROGRAMME-CONTROLLED CONTOUR

INSPECTION METHOD

This invention relates generally to an inspection process for measuring selected dimensions of a workpiece, more particularly for, determining the locations and and shapes of scorelines and edges of flat paperboard carton blanks in order to assess the accuracy thereof to such a method wherein a stylus or probe is computer programme-controlled to move rapidly across panels in between scorelines and openings, and then slowly over such scorelines or the edges of openings, producing a voltage signal which is proportional to its vertical displacement.

Heretofore, it has been common practice to inspect flat carton blanks by placing a transparent template on top of the blank, observing any out-of-tolerance scorelines or portions thereof, and then manually marking the errors. Also known are gear tooth flank-testing devices, wherein a measuring feeler or scanner is mounted on a carriage having X and Y coordinate slides, movable in the directions of tooth width and tooth depth, respectively, and controlled either manually or by a programme-controlled computer. In this regard, see Sterki Patent No. 4,356,556, issued October 26th 1982.

On object of the invention is to enable computer programme-controlled inspection of the locations and shapes of cut edges and scorelines of selected surfaces, such as flat paperboard carton blanks, and comparing same with desired manufacturing tolerances.

Another object of the invention is to provide such a computer programme-controlled carton blank inspection means, wherein a vertically oriented electromechanical transducer-type stylus or probe is mounted on a stepping motor-driven slide member along one axis, with the latter slide member, in turn, being mounted on a second stepping motor-driven slide member for movement along another axis, for traversing selected areas of the blank.

A further object of the invention is to provide such a computer programme-controlled carton blank inspection means and, additionally a printer for printing linear distances between scorelines on a layout thereof, and a cathode ray tube screen for displaying the cross-sectional shape of any scoreline being inspected.

Still another object of the invention is to provide a computer programme-controlled carton blank inspection means wherein those linear distances between scorelines which are compared with and found to be outside of manufacturing tolerances are printed on a layout of the carton blank.

An embodiment of the invention will now be described by way of example with reference to the accompanying drawings in which:

Figure 1 is a perspective view of paperboard carton blank inspection apparatus;

Figure 2 is a cross-section of an electromechanical transducer forming part of the apparatus shown in Figure 1;

Figure 3 is a block diagram of the apparatus shown in Figure 1; and

Figure 4 is a plan view of a typical carton blank which is to be inspected.

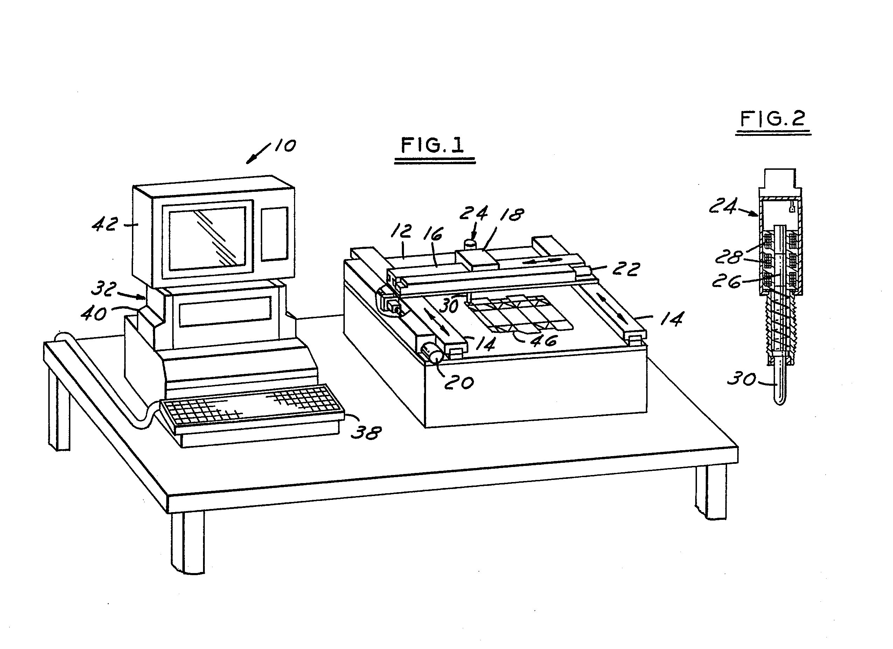

The apparatus (10) shown in Figures 1 to 3, includes a stationary inspection table 12 having a pair of oppositely disposed slide members 14 mounted on oppositely disposed edges of the table 12 for slidable movement along the X-axis. A support bar 16 straddles the pair of slide members and a further slide member 18 mounted on the support bar for slidable movement along the Y-axis. Stepping motors 20 and 22 mounted on the inspection table 12 are operatively connected to the slide members 14 and 18, respectively. An electromechanical transducer 24 mounted on the slide member 18 as shown in Figure 1, and including, coil assembly 28, and a stylus or probe 30 loaded by spring means 31 and extending from the bottom of the transducer, produces an electrical output proportional to the displacement of the movable core 26.

Associated with the inspection table 12 are suitable computer means 32 including microprocessors represented as 34 and 36; a keyboard 38; a printer 40; and a cathode ray tube screen or other visual display unit 42. The processor 34 is adapted to receive input discs 44 with any suitable programme incorporated thereon for inspecting a selected paperboard carton blank 46 placed in a particular location on the inspection table 12 beneath the inspection stylus 30.

As indicated above, the transducer 24 generates a voltage signal proportional to the vertical displacement of its stylus 30 which is connected via an amplified analog signal to a digital signal, and communicating the latter to the micro processor 36. Each stepping motor 20 and 22 has an encoder 52 and 54, respectively, coupled thereto for providing a feedback signal to the micro processor 36. The feedback signal is continuously compared with command signals sent to the stepping motors.

Limit switches 56, 58, 60 and 62 are mounted on the inspection table 12 to limit the X and Y axis movements in both directions for each.

In operation, a selected workpiece, such as a paperboard carton blank 46 which for example, may be for ½ pint, pint, quart, half gallon, or other similar sized folding cartons, is placed on the inspection table 12 within predetermined limits, say, ±.125 inches from established X-Y reference axes. The disk 44 bearing a desired program, including appropriate model and path tables, is loaded into the computer means 32. The program causes either the table 12 and the blank 46 mounted thereon to move in predetermined directions beneath a fixed stylus 30, or the stylus 30 to move relative to a fixed table 12 and an associated blank 46, depending upon the table 12 and stylus 30 designs selected. As illustrated in Figure 1, the stylus 30 and the associated slide member 18 are caused to move in a Y direction along the support bar 16, while the slide member 18 is caused to move in an X direction along the slide members 14.

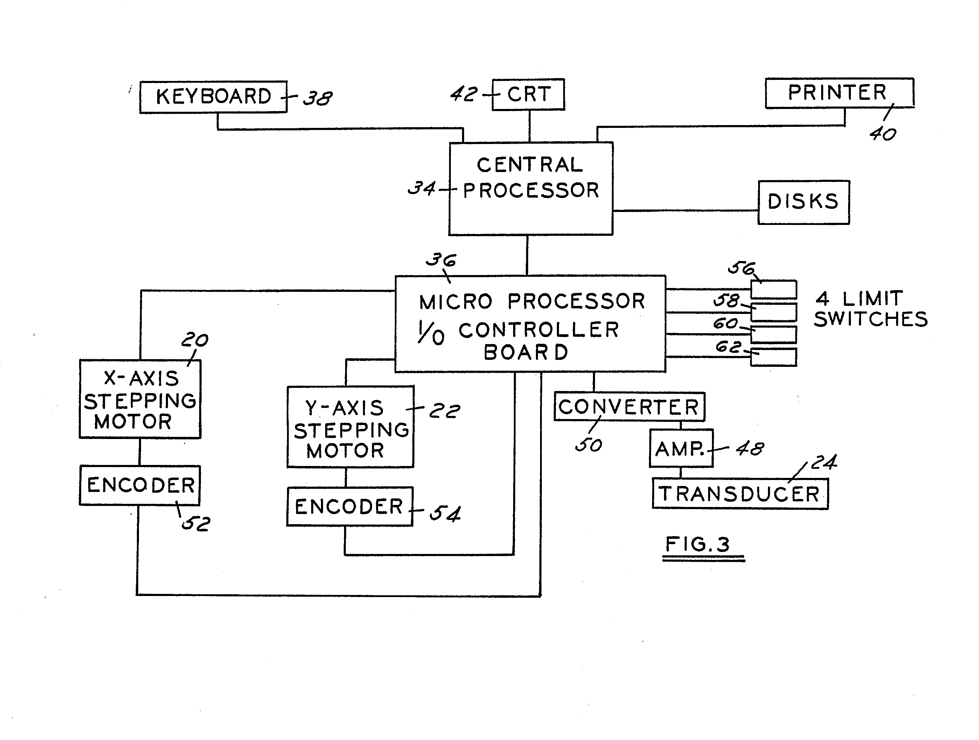

In either event, upon command via the keyboard 38, the relative movement between the stylus 30 and the blank 46 is programmed to start at a "home position" of selected zero X and Y coordinates (Figure 3), along a path or route such as that illustrated in Figure 3, which is predetermined by the data stored in the path table. This data consists of (1) a series of X and Y coordinate positions toward and away from which the relative movement occurs, and (2) changes of speed rates from high speed to low speed between inspection points wherein elevational data is collected, resulting from the vertical displacement of the core 26 of the stylus 30, amplification by the amplifier 48, conversion to a digital signal by the converter 50, and communication to the

computer means 32. Such inspection points may involve score lines and edges, for example, but are also applicable to the edges of separate layers attached to the upper surface of the workpiece.

As the stylus 30 moves away from the zero coordinate location at the start of a test, it is caused to pass over a gauge block, represented as 51, which duplicates a known score line height. The resultant output signal is thereupon calibrated by the software program to this known gauge block height.

As the stylus 30 continues along the designated path, the encoders 52 and 54 serve to count stepping motor 20 and 22 pulses from the zero position. For example, the motors may be such that there are 200 pulses or steps per revolution. Hence, if the table 12 leadscrew is selected to have a pitch of .200 inches per revolution, then each pulse or step of the motor indexes the table along its axis by .001 inch. Hence, the computer thereafter "knows" the position of the stylus relative to the starting point, and is programmed to collect height data intermediate selected points .200 inches on each side of an assumed centre of each score line to be checked, or on each side of a cut edge.

As the encoders continue to send positional data to the computer, the stylus 30 sends height data to the computer for each of the 400 intermediate steps. The computer is thus able to compute the highest point or centre of the score line as a reference for printing the linear distance between score lines on the printer 40, and to compute the cross-sectional shape of the score line for projection on the screen 42.

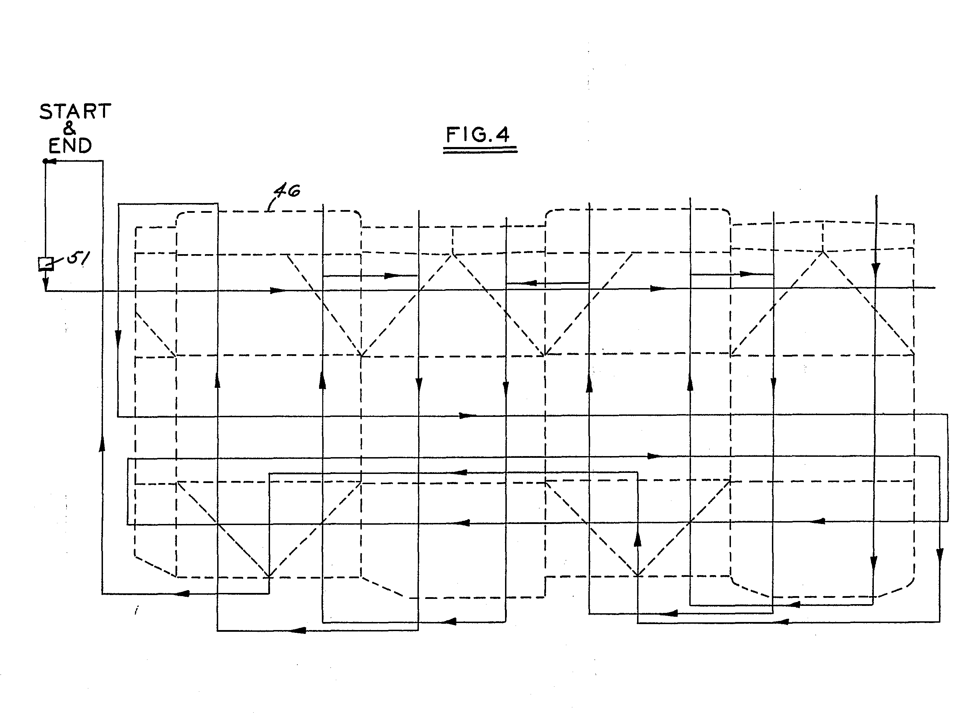

Once all of the above data has been accumulated as a result of the stylus 30 having traversed the entire path around the blank 46 as shown on Figure 4 the computer now has a series of points with which it can "draw" a blank via

-6-

the printer 40, with all of the major elements scaled accurately in relationship to each other.

The software is structured such that, at the beginning of each data collection series on a new blank 46, the transducer 24 is "zeroed out" with respect to the thickness of the selected blank relative to the plane of the table 12. Thereafter, during the collection process, the actual lateral and height dimensions are measured as indicated above, and compared to the nominal or blueprint values which are stored in the appropriate data storage tables. The print-out arrangement may be such that it is only if the variance exceeds the manufacturing tolerance for any particular dimension that the dimension will be printed, or, if desired, each measured dimension may be printed. In any event, the shape of each score line at the cross-over points may be shown on the screen 42, as well as printed by the printer 40, at the operator's discretion.

It will be apparent that, the above described inspection process enables an accurate spot check and record to be made periodically during manufacture of a carton or other type of blanks, so that suitable corrections can be made on the cutting and/or scoring dies as required.

CLAIMS :

1. An inspection process for measuring selected dimensions along a surface of a workpiece to be inspected, comprising the steps of:

(a) placing a workpiece to be inspected on a table relative to an X and Y coordinate reference point, beneath the stylus operatively connected to an electromechanical transducer;

(b) placing an appropriate predetermined programme in suitable computer means for causing relative movement of the table and stylus in the X and Y directions;

(c) traversing the upper surface of the workpiece with the transducer in a continuous manner along a predetermined programmed path at a slow rate of speed across inspection areas between selected points on opposite sides of predetermined high or low configurations on the upper surface, and at a fast rate of speed beyond the selected points to the next inspection area;

(d) measuring the lateral distance via stepping motors during the fast rate of speed, and measuring the lateral distance and vertical displacement of the stylus via the transducer during the slow rate of speed; and

(e) printing any out-of-tolerance lateral dimensions along the upper surface as compared to desired manufacturing tolerances.

2. A process according to claim 1, wherein an outline of the workpiece and the high or low configurations is printed in conjunction with the out-of-tolerance lateral dimensions.

3. A process according to claim 1, and the step of displaying on a cathode ray tube screen a cross-sectional view between the selected points on opposite sides of each configuration being inspected.

4. A process according to any one of claims 1 to 3, wherein the workpiece is a paperboard carton blank.

5. A process according to any one of claims 1 to 4, wherein the configurations are scorelines.

6. A process according to any one of claims 1 to 4, wherein the configurations are cut edges.

7. A process according to claim 5, and guage means in the path of the stylus adjacent the X and Y coordinate reference point for calibrating the output signals of the scoreline heights to the known height of the guage means.

0132947

FIG.2

FIG.1

FIG.3

START
&
END

FIG.4

46

51

0132947

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | US-A-3 727 119 (INFORMATION DEVELOPMENT) * whole document * | 1-3,7 | G 01 B 7/03 G 05 B 19/25 |
| A | GB-A-2 049 995 (ERNST LEITZ, WETZLAR) * whole document * | 1-3,7 | |
| A | US-A-3 135 055 (UNITED AIRCRAFT) * whole document * | 1-3,7 | |
| A | FR-A-2 341 399 (SAAB-SCANIA AB) * figures 1-3; page 7, line 4 - page 8, line 7; claim * | 1-3,7 | |
| D,A | EP-A-0 027 186 (STERKI A.) * whole document * | 1-3,7 | TECHNICAL FIELDS SEARCHED (Int. Cl.4) G 01 B 7/00 |

The present search report has been drawn up for all claims

| Place of search THE HAGUE | Date of completion of the search 01-11-1984 | Examiner BROCK T.J. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503. 03.82